(19) Europäisches Patentamt / European Patent Office / Office européen des brevets

(11) **EP 2 793 204 B1**

(12) **EUROPEAN PATENT SPECIFICATION**

(45) Date of publication and mention
of the grant of the patent:
**15.08.2018  Bulletin 2018/33**

(21) Application number: **12856966.2**

(22) Date of filing: **06.11.2012**

(51) Int Cl.:
*G08G 1/00* *(2006.01)*    *G01C 21/34* *(2006.01)*
*G06Q 50/30* *(2012.01)*    *G06Q 10/04* *(2012.01)*
*G08G 1/0968* *(2006.01)*

(86) International application number:
**PCT/JP2012/078731**

(87) International publication number:
**WO 2013/088862 (20.06.2013 Gazette 2013/25)**

(54) **TRAFFIC FLOW SIMULATOR, MOVEMENT ROUTE CALCULATION METHOD AND PROGRAM FOR SAME**

VERKEHRSFLUSSSIMULATOR, BEWEGUNGSROUTENBERECHNUNGSVERFAHREN UND PROGRAMM DAFÜR

SIMULATEUR D'ÉCOULEMENT DE TRAFIC, PROCÉDÉ DE CALCUL D'ITINÉRAIRE DE DÉPLACEMENT ET PROGRAMME POUR CEUX-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **14.12.2011  JP 2011273434**

(43) Date of publication of application:
**22.10.2014  Bulletin 2014/43**

(73) Proprietor: **Mitsubishi Heavy Industries, Ltd.**
**Tokyo 108-8215 (JP)**

(72) Inventors:
 • **KOYANAGI, Yoko**
  **Tokyo 108-8215 (JP)**
 • **SONODA, Takashi**
  **Tokyo 108-8215 (JP)**
 • **ONO, Hidekazu**
  **Tokyo 108-8215 (JP)**
 • **KAMINO, Yuichiro**
  **Tokyo 108-8215 (JP)**
 • **OGAWA, Hiroshi**
  **Tokyo 108-8215 (JP)**

 • **TAJIMA, Toshiyuki**
  **Tokyo 108-8215 (JP)**
 • **MORISHITA, Keiichi**
  **Tokyo 108-8215 (JP)**

(74) Representative: **Henkel, Breuer & Partner Patentanwälte**
**Maximiliansplatz 21**
**80333 München (DE)**

(56) References cited:
| | |
|---|---|
| JP-A- H10 239 083 | JP-A- 2000 193 470 |
| JP-A- 2001 304 890 | JP-A- 2005 189 056 |
| JP-A- 2007 255 927 | JP-A- 2007 303 918 |
| JP-A- 2010 101 709 | JP-A- 2011 232 134 |
| JP-A- 2012 078 128 | US-A- 6 163 751 |
| US-A1- 2002 035 430 | US-A1- 2004 143 387 |
| US-A1- 2004 172 192 | US-A1- 2005 131 628 |
| US-A1- 2009 105 934 | US-A1- 2011 029 231 |

Remarks:
The file contains technical information submitted after the application was filed and not included in this specification

EP 2 793 204 B1

**Description**

TECHNICAL FIELD

The present invention relates to a traffic flow simulator for computing a movement route of a moving object, a movement route calculation method, and a program for the same.
Priority is claimed on Japanese Patent Application No. 2011-273434, filed December 14, 2011.

BACKGROUND ART

Traffic flow simulation plays an important role in the study of traffic policies or road planning. For example, traffic flow simulation is used in computation of a change in a power consumption amount due to a recent increase in an electric vehicle (EV) penetration rate, solutions for congestion problems according to charging station congestion or the like, study and management of modal shift due to the introduction and operation of public traffic facilities, etc. Patent Literature 1 is disclosed as the related art using the traffic flow simulation. Other patent literature is US 2002/0035430 A1 related to a navigation system for calculating different routes to a destination while the vehicle is moving and US 2004/0172192 A1 related to a similar system wherein, after an initial route is set, the route is automatically updated whenever the vehicle strays from the set course or there is a change in current traffic conditions.

PRIOR ART LITERATURE

PATENT LITERATURE

[Patent Literature 1]
Japanese Unexamined Patent Application, First Publication No. 2010-67180

DISCLOSURE OF INVENTION

PROBLEMS TO BE SOLVED BY THE INVENTION

The above-described traffic flow simulation is also used in computation of a movement route of a moving object such as an EV. In a process of computing the movement route in the traffic flow simulation, a probabilistic route selection method or a multi-agent method is used. The probabilistic route selection method is a technique of probabilistically selecting a route and simulating a collective tendency. In addition, the multi-agent method is a technique of modeling an individual as an agent and computing utility for a movement route for every agent.
Here, in the traffic flow simulation described above, technology capable of simulating a more realistic movement route of a moving object without the load of calculation is necessary.
Therefore, an objective of the present invention is to provide a traffic flow simulator, a movement route calculation method, and a program for the same capable of solving the above-described problem.

MEANS FOR SOLVING THE PROBLEMS

In order to achieve the aforementioned objective, the present invention is a traffic flow simulator for simulating movement of a moving object which moves through a traffic network according to claim 1 of the appended claims. Further embodiments of the simulator are presented in claims 2 to 9.
In addition, the present invention is a movement route calculation method in a traffic flow simulator for simulating movement of a moving object which moves through a traffic network according to claim 10 of the appended claims. A further embodiment of the method is presented in claim 11.
In addition, the present invention is a program for causing a computer of a traffic flow simulator for simulating movement of a moving object, which moves through a traffic network according to claim 12 of the appended claims.

EFFECTS OF THE INVENTION

According to the present invention, a more realistic movement route of a moving object can be simulated without the load of calculation.

BRIEF DESCRIPTION OF THE DRAWINGS

Fig. 1 is a block diagram illustrating a configuration of a traffic flow simulator according to a first embodiment.
Fig. 2 is a diagram illustrating a processing flow of the traffic flow simulator according to the first embodiment.

PREFERRED EMBODIMENTS FOR CARRYING OUT THE INVENTION

(First embodiment)

Hereinafter, a traffic flow simulator according to the first embodiment of the present invention will be described with reference to the drawings.

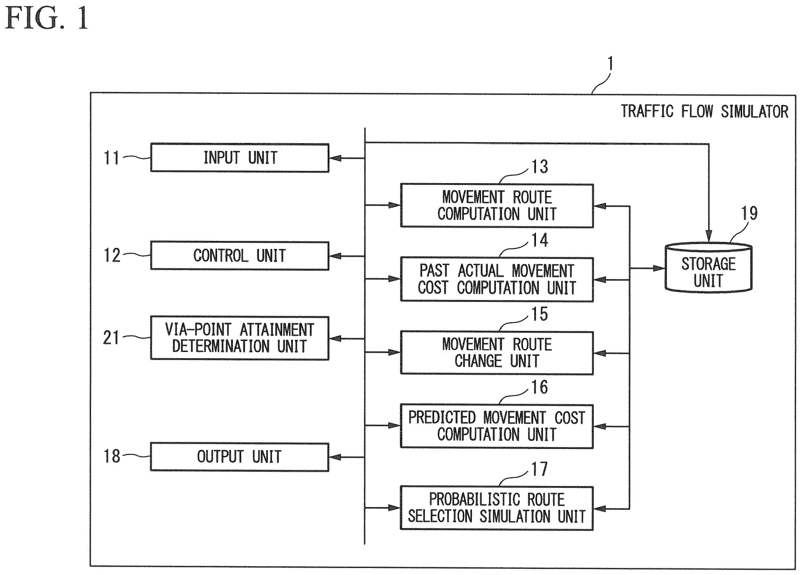

Fig. 1 is a block diagram illustrating a configuration of the traffic flow simulator according to the first embodiment.

In this drawing, reference numeral 1 represents the traffic flow simulator for simulating movement of a moving object which moves through a traffic network. The traffic flow simulator 1 includes processing units of an input unit 11, a control unit 12, a movement route computation unit 13, a past actual movement cost computation unit 14, a movement route change unit 15, a predicted movement cost computation unit 16, a probabilistic route selection simulation unit 17, a via-point attainment determination unit 21, and an output unit 18, and a storage unit 19.

The input unit 11 is the processing unit configured to input information input from a user interface such as a keyboard or mouse or information received via a communication network.

The control unit 12 is the processing unit configured to control each processing unit of the traffic flow simulator 1.

The movement route computation unit 13 is the processing unit configured to compute a movement route of a moving object from a departure point to a destination point.

The past actual movement cost computation unit 14 is the processing unit configured to compute a past actual movement cost to be computed using either one of a time and a fee required for the moving object to move from the departure point to the current point. Other information as well as the time and the fee may be used as information to be used in computation of the past actual movement cost. Details of a technique of computing the past actual movement cost will be described later.

The movement route change unit 15 is the processing unit configured to perform a movement route change process.

The predicted movement cost computation unit 16 is the processing unit configured to compute a predicted movement cost to be computed using at least one of a past actual time and a past actual fee required for moving to the destination point via an input via-point. Even for information used in the computation of the predicted movement cost, other information as well as the past actual time and the past actual fee may be used. The details of the technique of computing the past actual movement cost will be described later.

The probabilistic route selection simulation unit 17 is the processing unit configured to simulate a detailed movement route to a destination point such as the next via-point through the probabilistic route selection method.

The via-point attainment determination unit 21 is the processing unit configured to determine whether the current point is a predetermined distance in front of the next via-point.

The output unit 18 is the processing unit configured to output the computed movement route.

In addition, the storage unit 19 stores information necessary for each process.

According to the process of such a processing unit, in this embodiment, the traffic flow simulator capable of simulating a more realistic movement route of a moving object without the load of calculation is provided.

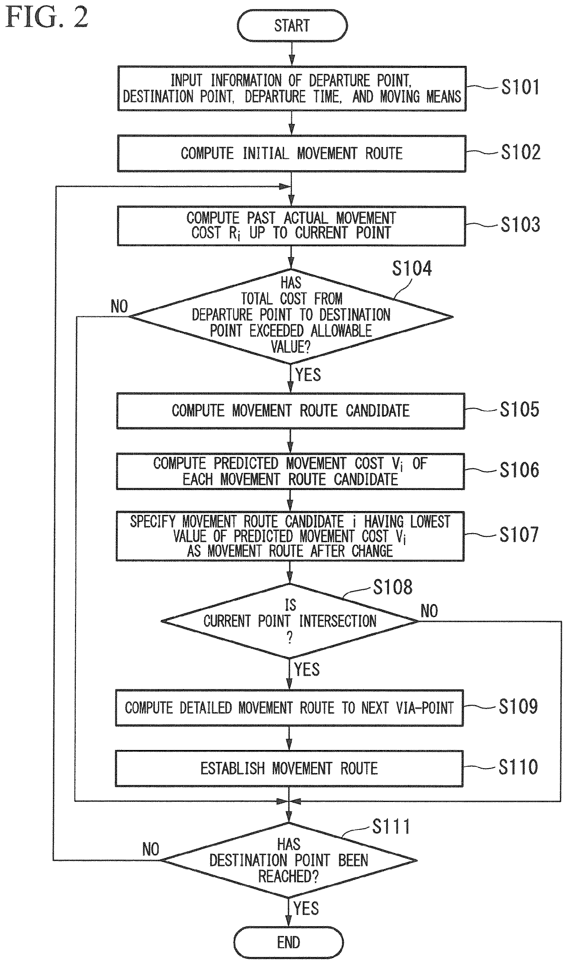

Fig. 2 is a diagram illustrating a processing flow of the traffic flow simulator according to the first embodiment.

Next, details of the process of the traffic flow simulator 1 according to the first embodiment will be described in order.

First, the input unit 11 of the traffic flow simulator 1 inputs information of a departure point, a destination point, a departure time, and a moving means (step S101). The information may be input from another device connected via a communication network or a user interface such as a keyboard or a mouse connected to the traffic flow simulator 1. The control unit 12 acquires the information input by the input unit 11 and stores the acquired information in the storage unit 19. Then, the control unit 12 starts a simulation process based on detection of a movement start of the moving means serving as the moving object. Also, the moving means in this embodiment is a vehicle.

Next, the control unit 12 instructs the movement route computation unit 13 to start the process. Then, the movement route computation unit 13 reads the departure point and the destination point from the storage unit 19. Therefore, the movement route computation unit 13 computes an initial movement route of the vehicle from the read departure point to the read destination point (step S102). The movement route may be computed, for example, using a computation technique in conventional vehicle movement simulation. In addition, in the computation of the movement route, a movement route having a lowest predicted movement cost value may be configured to be computed. The technique of computing the predicted movement cost will be described later. In addition, in the computation of the movement route, the movement route computation unit 13 may be configured to compute a movement route including a via-point designated by a user. Then, the movement route computation unit 13 notifies the control unit 12 of movement route computation completion and records the movement route on the storage unit 19. In addition, based on control of the control unit 12, the output unit 18 displays the computed movement route on a monitor or the like.

Next, the control unit 12 instructs the past actual movement cost computation unit 14 to start the process. Based on this instruction, the past actual movement cost computation unit 14 reads the departure point recorded on the storage unit 19. Therefore, the past actual movement cost computation unit 14 computes past actual movement cost $R_i$ from the departure point to the current point of the vehicle computed according to the simulation process of the control unit 12 (step S103). Here, past actual movement cost $R_i$ computed in step 103 is a value computed using at least either one of a time and a fee required for moving from the departure point to the current point. In addition, past actual movement cost $R_i$ may further be a value computed using another element. For example, past actual movement cost $R_i$ is computed by Equation (1).

[Math. 1]

$$R_i = \sum_i \theta_i x_i + C_1 \qquad \cdots \quad (1)$$

In Equation (1), $x_i$ represents an element used to compute past actual movement cost $R_i$, $\theta_i$ represents a weight for element $x_i$, and $C_1$ represents a correction term. As the element $x_i$ used to compute past actual movement cost $R_i$, there are a "gap between a predicted movement time and a desired movement time to the current point," a "degree to which an average speed representing an average of a speed of a vehicle from the departure point to the current point is low," a "degree to which a fee required until the current point is reached is high," etc. The degree to which the fee required until the current point is reached is high, for example, may be a value computed according to a toll of a toll road, a fuel cost (or a fuel consumption amount), or the like, and represents a higher value when the toll or the fuel cost (or the fuel consumption amount) is higher.

Also, the predicted movement time or the desired movement time to the current point, for example, is computed based on the predicted movement time to the destination point computed by the movement route computation unit 13 or the desired movement time to the destination point. The desired movement time is a value pre-computed based on a questionnaire or the like in a region in which simulation is performed. Therefore, the predicted movement time or the desired movement time to the current point may be specifically computed by "predicted movement time to current point = predicted movement time to destination point × movement ratio X" and "desired movement time to current point = desired movement time to destination point × movement ratio X" using movement ratio X of the current point for a distance from the departure point to the destination point. Alternatively, the predicted movement time or the desired movement time to the current point may be computed according to other techniques.

Also, based on the above-described simulation, the via-point attainment determination unit 21 determines whether a current position is a predetermined distance in front of a via-point based on pre-stored coordinates of a via-point and coordinates of the current position. When the current position is the predetermined distance in front of the via-point, the via-point attainment determination unit 21 notifies the past actual movement cost computation unit 14 of information of the fact. Then, upon determining that the current position is the predetermined distance in front of the via-point according to movement of the vehicle by a simulation process, the past actual movement cost computation unit 14 computes the past actual movement cost according to the above-described process of step S103. While the vehicle moves, a value of element $x_i$ used to compute past actual movement cost $R_i$ changes. Therefore, when computing past actual movement cost $R_i$, the past actual movement cost computation unit 14 outputs a computed value to the movement route change unit 15.

When the value of past actual movement cost $R_i$ is input, the movement route change unit 15 determines whether a predicted total cost from the departure point to the destination point obtained by adding the value of past actual movement cost $R_i$ to a value of predicted movement cost $V_i$ from the current point to the destination point has exceeded the allowable value (step S104). Therefore, when the total cost has exceeded the allowable value, the movement route change unit 15 notifies the control unit 12 of re-calculation of the movement route. When the total cost has not exceeded the allowable value, the movement route change unit 15 receives an input of a result of determining whether the destination point has been reached based on the process of step S111 to be described later from the control unit 12. Then, when the destination point has not been reached, the movement route change unit 15 iterates a determination of whether the total cost has exceeded the allowable value using past actual movement cost $R_i$ input from the past actual movement cost computation unit 14 and predicted movement cost $V_i$ from the current point to the destination point at predetermined time intervals. Also, the allowable value of the total cost from the departure point to the destination point is recorded on the storage unit 19. The allowable value, for example, is a value pre-computed based on a questionnaire or the like in a region for which simulation is performed. In addition, the allowable value of the total cost from the departure point to the destination point may be a value computed by another method. A technique of computing predicted movement cost $V_i$ will be described later.

Upon determining that the total cost has exceeded the allowable value, the control unit 12 instructs the movement route computation unit 13 to calculate the movement route candidate from the current point to the destination point different from the already computed movement route. Thereby, the movement route computation unit 13 computes the movement route candidate (step S105). In the calculation of the movement route candidate, the movement route computation unit 13 acquires information of a plurality of via-points before the destination point which is not included on an initial movement route from the storage unit 19. The information of the via-points may be information pre-input by the user to the traffic flow simulator 1 and recorded on the storage unit 19. The movement route computation unit 13 computes a movement route candidate which passes through one of the plurality of acquired via-points. In addition, the movement route computation unit 13 computes the movement route candidate for each of the plurality of acquired via-points. The movement route computation unit 13 records information of the computed movement route candidate on the storage unit 19. Therefore, the movement route computation unit 13 notifies the control unit 12 of movement route candidate computation completion.

Upon receiving the notification of the movement route candidate computation completion, the control unit 12 instructs the predicted movement cost computation unit 16 to compute predicted movement cost $V_i$ for each of the movement route candidates. At this time, the predicted movement cost computation unit 16 acquires information of each of the movement route candidates from the storage unit 19, and computes predicted movement cost $V_i$ which is a cost capable of being incurred in the movement of the moving object for each movement route candidate (step S106). The predicted movement cost $V_i$ is computed by Equation (2).

[Math. 2]

$$V_i = \sum_k \beta_k x_{ik} \qquad \cdots (2)$$

In Equation (2), $x_{ik}$ represents a value of element k used in computation of predicted movement cost $V_i$ for movement route candidate i, and $\beta_k$ represents a weight for element k. Also, as element k used in the computation of predicted movement cost $V_i$, there are a "degree to which an average speed from the current point to the destination point is low (representing a higher value when the speed is slower)," a "degree to which a fee is high," etc. pre-recorded as the past actual result information for an individual user such as a driver on the storage unit 19. In addition, the "degree to which the fee is high" may be a degree to which a fee computed based on a fee including a toll of a toll road, a fuel cost (or a fuel consumption amount), or the like is high. The information of element k for an individual user may be recorded by the user on the storage unit 19 based on a past actual result value at the time of past movement from the current point to the destination point. Alternatively, the information of element k for the individual user may be information computed based on learned data according to a past simulation process or the like and recorded on the storage unit 19. In this manner, because the movement route candidate is computed based on information representing a past actual result of the individual user, it is possible to reflect information representing the past actual result (experience) of the individual user in the computation of the next movement route when the total cost capable of being computed using past actual movement cost $R_i$ and predicted movement cost $V_i$ from the current point to the destination point is greater than or equal to the allowable value.

Also, information (such as a degree of congestion) computed based on information of a traffic situation (a situation of traffic congestion or the like) of a current time point distributed from a sever provided in a public facility or the like via a communication network may be configured to be further included as information of element k to be used in computation of predicted movement cost $V_i$.

The predicted movement cost computation unit 16 outputs predicted movement cost $V_i$ to the movement route change unit 15 for each computed movement route candidate i. Then, the movement route change unit 15 specifies movement route candidate i having a lowest value of predicted movement cost $V_i$, and specifies movement route candidate i as a changed movement route (step S107). Therefore, the movement route change unit 15 records information of the changed movement route on the storage unit 19. Also, the information of the movement route may be any information representing the movement route. For example, the information of the movement route is information (coordinates) of a departure point, a destination point, and a via-point, or the like.

Also, in the above-described process, the movement route computation unit 13 computes a separate movement route candidate for each of the plurality of via-points recorded on the storage unit 19. This means that, for example, when there are via-points A to C, each of a movement route candidate which passes through via-point A, a movement route candidate which passes through via-point B, and a movement route candidate C which passes through via-point C is computed. However, in addition to the above, for example, a plurality of movement route candidates which pass through a plurality of via-points may be computed. That is, via-points D, E, F, G, H, I, and J may be recorded on the storage unit 19, and the movement route computation unit 13 may compute a movement route candidate which passes through via-points D and E, a movement route candidate which passes through via-points F and G, and a movement route candidate which passes through via-points H, I, and J. There are methods of computing a via-point and a movement route candidate which passes through the via-point based on pre-setting, etc.

When information of a changed movement route is computed, the control unit 12 determines whether a current point of the vehicle according to a simulation process is an intersection (step S108). Upon determining that the current point of the vehicle is the intersection, the control unit 12 instructs the probabilistic route selection simulation unit 17 to start the process. Therefore, the probabilistic route selection simulation unit 17 computes a detailed movement route to the next via-point (step S109). In the above-described step 107, the changed movement route specified by the movement route change unit 15 is a general movement route for moving to the destination point via the via-point. Accordingly, the probabilistic route selection simulation unit 17 computes a detailed movement route to the next via-point. In the process, the probabilistic route selection simulation unit 17 calculates a movement route to the next via-point according to a road situation using a probabilistic route selection method. It is possible to reduce the load of calculation without reflecting an influence of personal preference in detailed movement route selection up to the next via-point using the probabilistic route selection method. In the probabilistic route selection method, computation is performed using a route size logit model or the like as shown in Equation (3).

[Math. 3]

$$P_i = \frac{\exp(V_i + \beta_{PS} PS_i)}{\sum\limits_{j} \exp(V_j + \beta_{PS} PS_j)} \qquad \cdots \quad (3)$$

In Equation (3),

$P_i$ represents selectivity of movement route i,
$V_i$ represents a predicted movement cost of movement route i,
$\beta_{PS}$ represents a weight of a correction term, and
$PS_i$ represents a correction term of movement route i.
Also, j is a variable of 1 to n when movement route i is 1 to n.

In the computation of the detailed movement route, the probabilistic route selection simulation unit 17 establishes movement route i when a lowest value of $P_i$ is computed according to Equation (3) (step S110). Therefore, the probabilistic route selection simulation unit 17 records information of the detailed movement route to the next established via-point on the storage unit 19. In addition, the probabilistic route selection simulation unit 17 notifies the control unit 12 of processing completion.

Next, when the predicted total cost from the departure point to the destination point has not exceeded the allowable value after step S110 or in step S104 or upon determining that the current point is not the intersection in step S108, the control unit 12 determines whether the vehicle for which simulation has been performed has reached the destination point (step S111). Upon determining that the vehicle has not reached the destination point, the control unit 12 iterates the process from step S103 using the fact that the vehicle has reached a predetermined distance in front of the next via-point as a trigger. In addition, the control unit 12 ends the process upon determining that the vehicle has reached the destination point in step S111.

The traffic flow simulator 1 performs the above-described process of steps S101 to S111 for each of the plurality of vehicles and simulates a traffic flow.

Although the process of the first embodiment of the present invention has been described above, information representing a past actual result (experience) of an individual person is reflected in computation of the movement route desired to be changed when the predicted total cost from the departure point to the destination point is greater than or equal to the allowable value according to the above-described process. Thereby, it is possible to perform realistic traffic flow simulation.

In addition, because an influence of personal preference is not reflected in detailed movement route selection from the intersection to the next via-point by employing the probabilistic route selection method according to the above-described process, it is possible to reduce the load of calculation.

(Second embodiment)

Although an example in which the moving means is a vehicle has been described in the first embodiment, the case in which the traffic flow simulator 1 calculates a movement route when a plurality of transportation means are used in movement will be described in the second embodiment.

The configuration of the traffic flow simulator 1 according to the second embodiment is similar to that of Fig. 1. Here, in this embodiment, the via-point may be information input by the input unit 11 from the user, and a predetermined major point which is located on the computed movement route or near the movement route may be configured to be automatically specified as the via-point. Therefore, the via-point attainment determination unit 21 acquires coordinates of the current point of the current moving means obtained based on a simulation process. Therefore, consistency is determined by comparing coordinates of the current point to coordinates of the via-point. Upon determining that the coordinates of the current point are consistent with the coordinates of the via-point, the via-point attainment determination unit 21 notifies the control unit 12 of the fact that the current point is the via-point.

The control unit 12 selects the moving means from the arrival via-point, outputs the moving means to the movement route computation unit 13, and instructs to compute the movement route. The movement route computation unit 13 computes the movement route to the destination point according to the input moving means and records the computed movement route on the storage unit 19. At this time, the movement route computation unit 13 may be configured to compute up to a movement route to the next via-point. Thereafter, the traffic flow simulator 1 may be configured to perform a process subsequent to step S102 of the first embodiment using the computed movement route as an initial movement route. Therefore, the traffic flow simulator 1 iterates a determination of whether the coordinates of the current point are consistent with the coordinates of the via-point again.

According to the process of the traffic flow simulator 1 according to the above second embodiment, it is possible to compute the movement route using a plurality of moving means every time the via-point is reached.

(Third embodiment)

Next, a process of the traffic flow simulator 1 according to the third embodiment will be described.

In the traffic flow simulator 1 according to the third embodiment, first, the input unit 11 inputs a plurality of moving means, a departure point, and a destination point. Then, the movement route computation unit 13 separately computes a movement route from the departure point to the destination point using the input moving means for each of the plurality of moving means. Therefore, the movement route computation unit 13 outputs the initial movement route and moving means when a lowest value of predicted movement cost $V_i$ has been computed among movement routes of each moving means according to the above-described Equation (2) to the control unit 12. In the computation of predicted movement cost $V_i$, computation is performed using information of element k for an individual user as in the first embodiment. In addition, the movement route computation unit 13 records the initial movement route and moving means on the storage unit 19.

Therefore, the traffic flow simulator 1 performs the process subsequent to step S102 of the first embodiment. Also, the movement route computation unit 13 may be configured to use a load (whether movement is possible while sitting or the like) when the moving means is a public transportation facility as a value of element k used in the computation of predicted movement cost $V_i$ in the computation of the initial movement route.

In addition, in the third embodiment, a moving means change process may be configured to be performed in place of the movement route change process in the first embodiment when the total cost from the departure point to the destination point has exceeded the allowable value in the above-described process of step S104. In this case, upon determining that the total cost from the departure point to the destination point has exceeded the allowable value of the current point in step S104, the control unit 12 selects the next moving means.

Then, the control unit 12 outputs the moving means to the movement route computation unit 13 and instructs to compute the movement route. The movement route computation unit 13 computes the movement route to the destination point according to the input moving means and records the computed movement route on the storage unit 19. Thereafter, the traffic flow simulator 1 performs a process subsequent to step S102 of the first embodiment using the computed movement route as the initial movement route.

(Fourth embodiment)

Next, a process of the traffic flow simulator 1 according to the fourth embodiment will be described.

In the fourth embodiment, first, the input unit 11 inputs information of a departure point, a destination point, a departure time, a moving means, etc., as in step S101 of the first embodiment. Then, an initial movement route is computed according to any process of the above-described embodiment. In addition, as the moving means, a moving means having low predicted movement cost $V_i$ may be configured to be selected from among a plurality of moving means. Then, a process subsequent to step S102 of the first embodiment is performed.

Then, when the value of the total cost from the departure point to the destination point in the above-described step S104 has exceeded the allowable value, the movement route change unit 15 has an attribute similar to that of the input destination point and reads one or more other destination points from the storage unit 19 in place of the process described in the first embodiment. For example, when the fact that the attribute of the destination point used in the computation of the initial movement route is a shopping mall is recorded on the storage unit 19, one or more other destination points having the attribute of the shopping mall are read from the storage unit 19. The attribute of the destination point or information of the other destination points, for example, may be information pre-input according to an operation of the user or the like and recorded on the storage unit 19. The movement route change unit 15 notifies the movement route computation unit 13 of the other read destination points. Then, based on control of the control unit 12, the movement route computation unit 13 calculates the movement route candidate from the current point to the other input destination point as in the process of step S105.

Upon computing the movement route candidate, the movement route computation unit 13 notifies the control unit 12 of computation completion. Upon receiving the notification of the computation completion of the movement route candidate, the control unit 12 instructs the predicted movement cost computation unit 16 to compute predicted movement cost $V_i$ for each of the movement route candidates. Thereby, the predicted movement cost computation unit 16 computes predicted movement cost $V_i$ as in the process of step S106. In addition, as in step S107, the movement route change unit 15 specifies a changed movement route. Then, the traffic flow simulator 1 similarly performs a process subsequent to the above-described step S108.

When the total cost from the departure point to the destination point has exceeded the allowable value according to the above process, a change to another destination point having the same attribute can be made. For example, when the predicted total cost up to the destination point according to congestion or the like for a shopping mall in a west direction is greater than the allowable value, the use in a process such as a change of a destination point to the shopping mall in an east direction is possible.

The above-described traffic flow simulator 1 may internally include a computer system. Therefore, the steps of each of the above-described processes are stored in a program format on a computer-readable recording medium, and the above-described processes are executed by causing a computer to read and execute the program. The computer-readable recording medium refers to a magnetic disk, a magneto-optical disc, a compact disc-read only memory (CD-ROM), a digital versatile disc (DVD)-ROM, a semiconductor memory, or the like. The computer program may be configured to be distributed to a computer via a communication circuit and executed by the computer receiving the distribution.

In addition, the above-described program may be used to implement some of the above-described functions. Further, the above-described program may also be a program capable of implementing the above-described functions in combination with a program already recorded on the computer system, that is, a so-called differential file (differential program).

INDUSTRIAL APPLICABILITY

The present invention is widely applicable to a traffic flow simulator and a movement route calculation method for computing a movement route of a moving object and enables a more realistic movement route of the moving object to be simulated without the load of calculation.

DESCRIPTION OF THE REFERENCE SYMBOLS

| | |
|---|---|
| 1 | Traffic flow simulator |
| 11 | Input unit |
| 12 | Control unit |
| 13 | Movement route computation unit |
| 14 | Past actual movement cost computation unit |
| 15 | Movement route change unit |
| 16 | Predicted movement cost computation unit |
| 17 | Probabilistic route simulation unit |
| 18 | Output unit |
| 19 | Storage unit |

**Claims**

1. A traffic flow simulator for simulating movement of a moving object which moves through a traffic network, the traffic flow simulator comprising:

   a predicted movement cost computation unit (16) configured to compute a predicted movement cost which is a cost capable of being incurred in the movement of the moving object for each movement route candidate; and a movement route change unit (15) configured to perform a process of selecting one of a plurality of movement route candidates based on the predicted movement cost computed by the predicted movement cost computation unit (16) and changing the movement route to a route including the selected movement route candidate; **characterized in that** the predicted movement cost computation unit (16) is configured to compute the predicted movement cost using at least one of a past actual time and a past actual fee required for the movement of each of routes represented by the plurality of movement route candidates from a current point to a destination point of the movement wherein the moving object moves through a preset movement route; and the past actual time and the past actual fee are values of a past movement of the moving object from the current point to the destination point.

2. The traffic flow simulator according to claim 1, **characterized by** comprising:

   a past actual movement cost computation unit (14) configured to compute a past actual movement cost to be computed using at least one of a time and a fee required for movement from a departure point of the moving object to the current point, wherein the movement route change unit performs a process of changing the movement route when the cost from the departure point to the destination point based on the past actual movement cost and the predicted movement cost has exceeded an allowable value.

3. The traffic flow simulator according to claim 1 or 2, **characterized in that** the movement route change unit (15) is configured to perform a process of changing a via-point before the destination point.

4. The traffic flow simulator according to any one of claims 1 to 3, **characterized in that** the movement route change unit (15) is configured to change the movement route to a route including a movement route candidate when a lowest predicted movement cost has been computed among the plurality of movement route candidates.

5. The traffic flow simulator according to claim 4, **characterized in that** the predicted movement cost computation unit (16) is configured to compute the predicted movement cost further using information of a traffic situation of a current time point.

6. The traffic flow simulator according to any one of claims 1 to 5, **characterized by** comprising:

   a probabilistic route selection simulation unit (17) configured to specify a movement route to the next via-point of the moving object using a probabilistic route selection method; the probabilistic route selection simulation unit (17) being configured to establish the movement route i having a lowest value of $P_i$ representing a selectivity of movement route i; wherein

$$P_i = \frac{\exp(V_i + \beta_{PS} PS_i)}{\sum_j \exp(V_j + \beta_{PS} PS_j)} \qquad \cdots (3)$$

   $V_i$ represents a predicted movement cost of movement route i,
   $\beta_{PS}$ represents a weight of a correction term,
   $PS_i$ represents a correction term of movement route i;
   j is a variable of 1 to n when movement route i is 1 to n.

7. The traffic flow simulator according to any one of claims 1 to 6, **characterized in that** the movement route change unit (15) is configured to perform a destination point change process; wherein the movement route change unit (15) is configured to change the destination point to another destination point having the same attribute as the destination point read from the storage unit when a predicted total cost from the departure point to the destination point obtained by adding the value of past actual movement cost to a value of predicted movement cost has exceeded the allowable value.

8.  The traffic flow simulator according to any one of claims 1 to 7, **characterized in that**, when the current point is consistent with a via-point, the movement route change unit (15) is configured to perform a process of changing the moving object and the movement route based on the predicted movement cost.

9.  The traffic flow simulator according to any one of claims 1 to 8, **characterized in that**
the predicted movement cost computation unit (16) is configured to compute the predicted movement cost using Equation (1) where $x_{ik}$ represents a value of element k used in computation of predicted movement cost $V_i$ for movement route candidate i, and $\beta_k$ represents a weight for element k

$$V_i = \sum_k \beta_k x_{ik} \cdot \cdot (1) \, .$$

10. A movement route calculation method in a traffic flow simulator for simulating movement of a moving object which moves through a traffic network, the movement route calculation method comprising:

computing, by a predicted movement cost computation unit (16), a predicted movement cost which is a cost capable of being incurred in the movement of the moving object for each movement route candidate using at least one of a past actual time and a past actual fee required for the movement of each of routes represented by a plurality of movement route candidates from a current point to a destination point of the movement route wherein the moving object moves through a preset movement route, the past actual time and the past actual fee being values of a past movement of the moving object from the current point to the destination point; and performing, by a movement route change unit (15), a process of selecting one of the plurality of movement route candidates based on the predicted movement cost computed by the predicted movement cost computation unit (16) and changing the movement route to a route including the selected movement route candidate.

11. The movement route calculation method of claim 10, comprising a step of computing the predicted movement cost using Equation (1) where $x_{ik}$ represents a value of element k used in computation of predicted movement cost $V_i$ for movement route candidate i, and $\beta_k$ represents a weight for element k

$$V_i = \sum_k \beta_k x_{ik} \cdot \cdot (1) \, .$$

12. A program for causing a computer of a traffic flow simulator for simulating movement of a moving object using the method of claim 10 or 11.

**Patentansprüche**

1.  Verkehrsflusssimulator zum Simulieren einer Bewegung eines Bewegungsobjekts, welches sich durch ein Verkehrsnetz bewegt, wobei der Verkehrsflusssimulator aufweist:

eine Kostenberechnungseinheit für eine vorhergesagte Bewegung (16), die konfiguriert ist, um Kosten für eine vorhergesagte Bewegung zu berechnen, welche Kosten darstellen, die bei der Bewegung des Bewegungsobjekts für jeden Bewegungswegkandidaten auftreten können; und
eine Bewegungswegänderungseinheit (15), die konfiguriert ist, um einen Prozess zum Auswählen eines aus einer Vielzahl von Bewegungswegkandidaten basierend auf den durch die Kostenberechnungseinheit für eine vorhergesagte Bewegung (16) berechneten Kosten für eine vorhergesagte Bewegung und zum Ändern des Bewegungswegs auf einen Weg einschließlich des ausgewählten Bewegungswegkandidaten durchzuführen;
**dadurch gekennzeichnet, dass**
die Kostenberechnungseinheit für eine vorhergesagte Bewegung (16) konfiguriert ist, um die Kosten für eine vorhergesagte Bewegung unter Verwendung von zumindest einer vergangenen tatsächlichen Zeit und einer vergangenen tatsächlichen Gebühr zu berechnen, die für die Bewegung von jedem von Wegen erforderlich sind, die durch die Vielzahl von Bewegungswegkandidaten dargestellt sind, von einem gegenwärtigen Punkt zu einem Zielpunkt der Bewegung, wobei sich das Bewegungsobjekt durch einen voreingestellten Bewegungsweg bewegt; und

die vergangene tatsächliche Zeit und die vergangene tatsächliche Gebühr Werte einer vergangenen Bewegung des Bewegungsobjekts von dem gegenwärtigen Punkt zu dem Zielpunkt sind.

2. Verkehrsflusssimulator nach Anspruch 1, **gekennzeichnet durch**:

eine Kostenberechnungseinheit für eine vergangene tatsächliche Bewegung (14), die konfiguriert ist, um Kosten für eine vergangene tatsächliche Bewegung zu berechnen, die unter Verwendung von zumindest einer Zeit und einer Gebühr zu berechnen sind, die für eine Bewegung von einem Startpunkt des Bewegungsobjekts zu dem gegenwärtigen Punkt erforderlich sind,

wobei die Bewegungswegänderungseinheit einen Prozess zum Ändern des Bewegungswegs durchführt, wenn die Kosten von dem Startpunkt zu dem Zielpunkt basierend auf den vergangenen tatsächlichen Bewegungskosten und den vorhergesagten Bewegungskosten einen zulässigen Wert überschritten haben.

3. Verkehrsflusssimulator nach Anspruch 1 oder 2, **dadurch gekennzeichnet, dass** die Bewegungswegänderungseinheit (15) konfiguriert ist, um einen Prozess zum Ändern eines Durchgangspunkts vor dem Zielpunkt durchzuführen.

4. Verkehrsflusssimulator nach einem der Ansprüche 1 bis 3, **dadurch gekennzeichnet, dass** die Bewegungswegänderungseinheit (15) konfiguriert ist, um den Bewegungsweg auf einen Weg einschließlich eines Bewegungswegkandidaten zu ändern, wenn niedrigste vorhergesagte Bewegungskosten unter der Vielzahl von Bewegungswegkandidaten berechnet worden sind.

5. Verkehrsflusssimulator nach Anspruch 4, **dadurch gekennzeichnet, dass** die Kostenberechnungseinheit für eine vorhergesagte Bewegung (16) konfiguriert ist, um die vorhergesagten Bewegungskosten unter weiterer Verwendung von Informationen einer Verkehrssituation zu einem gegenwärtigen Zeitpunkt zu berechnen.

6. Verkehrsflusssimulator nach einem der Ansprüche 1 bis 5, **gekennzeichnet durch**:

eine Simulationseinheit für eine wahrscheinliche Wegauswahl (17), die konfiguriert ist, um einen Bewegungsweg zu dem nächsten Durchgangspunkt des Bewegungsobjekts unter Verwendung eines wahrscheinlichen Wegauswahlverfahrens zu spezifizieren;

die Simulationseinheit für eine wahrscheinliche Wegauswahl (17) konfiguriert ist, um den Bewegungsweg i mit einem niedrigsten Wert von $P_i$, der eine Auswahl eines Bewegungswegs i darstellt, zu errichten; wobei

$$P_i = \frac{\exp(V_i + \beta_{PS} PS_i)}{\sum_j \exp(V_j + \beta_{PS} PS_j)} \qquad \cdots \ (3)$$

wobei $V_i$ Kosten für eine vorhergesagte Bewegung eines Bewegungswegs i darstellt,

$\beta_{PS}$ eine Gewichtung eines Korrekturterms darstellt,

$PS_i$ einen Korrekturterm eines Bewegungswegs i darstellt,

j eine Variable von 1 bis n ist, wenn ein Bewegungsweg i 1 bis n ist.

7. Verkehrsflusssimulator nach einem der Ansprüche 1 bis 6, **dadurch gekennzeichnet, dass** die Bewegungswegänderungseinheit (15) konfiguriert ist, um einen Zielpunktänderungsprozess durchzuführen,

wobei die Bewegungswegänderungseinheit (15) konfiguriert ist, um den Zielpunkt zu einem anderen Zielpunkt mit demselben Attribut wie der Zielpunkt, der aus der Speichereinheit gelesen ist, zu ändern, wenn vorhergesagte Gesamtkosten von dem Startpunkt zu dem Zielpunkt, die durch Hinzufügen des Werts von vergangenen tatsächlichen Bewegungskosten zu einem Wert von vorhergesagten Bewegungskosten erhalten sind, den zulässigen Wert überschritten haben.

8. Verkehrsflusssimulator nach einem der Ansprüche 1 bis 7, **dadurch gekennzeichnet, dass**, wenn der gegenwärtige Punkt konsistent zu einem Durchgangspunkt ist, die Bewegungswegänderungseinheit (15) konfiguriert ist, um einen Prozess zum Ändern des Bewegungsobjekts und des Bewegungswegs basierend auf den vorhergesagten Bewegungskosten durchzuführen.

**9.** Verkehrsflusssimulator nach einem der Ansprüche 1 bis 8, **dadurch gekennzeichnet, dass** die Kostenberechnungseinheit für eine vorhergesagte Bewegung (16) konfiguriert ist, um die vorhergesagten Bewegungskosten unter Verwendung von Gleichung (1) zu berechnen, wobei $x_{ik}$ einen Wert von Element k darstellt, der bei der Berechnung von vorhergesagten Bewegungskosten $V_i$ für einen Bewegungswegkandidaten i verwendet wird, und $\beta_k$ eine Gewichtung für Element k darstellt

$$V_i = \sum_k \beta_k x_{ik} \qquad ..(1).$$

**10.** Bewegungswegberechnungsverfahren in einem Verkehrsflusssimulator zum Simulieren einer Bewegung eines Bewegungsobjekts, welches sich durch ein Verkehrsnetz bewegt, wobei das Bewegungswegberechnungsverfahren aufweist:

Berechnen, durch eine Kostenberechnungseinheit für eine vorhergesagte Bewegung (16), von vorhergesagten Bewegungskosten, welche Kosten darstellen, die bei der Bewegung des Bewegungsobjekts für jeden Bewegungswegkandidaten unter Verwendung von zumindest einer vergangenen tatsächlichen Zeit und einer vergangenen tatsächlichen Gebühr, die für die Bewegung von jedem von Wegen erforderlich sind, die durch eine Vielzahl von Bewegungswegkandidaten von einem gegenwärtigen Punkt zu einem Zielpunkt des Bewegungswegs dargestellt sind, auftreten können, wobei sich das Bewegungsobjekt durch einen voreingestellten Bewegungsweg bewegt, und wobei die vergangene tatsächliche Zeit und die vergangene tatsächliche Gebühr Werte einer vergangenen Bewegung des Bewegungsobjekts von dem gegenwärtigen Punkt zu dem Zielpunkt sind; und Durchführen, durch eine Bewegungswegänderungseinheit (15), eines Prozesses zum Auswählen eines der Vielzahl von Bewegungswegkandidaten basierend auf den durch die Kostenberechnungseinheit für eine vorhergesagte Bewegung (16) berechneten vorhergesagten Bewegungskosten, und zum Ändern des Bewegungswegs zu einem Weg einschließlich des ausgewählten Bewegungswegkandidaten.

**11.** Bewegungswegberechnungsverfahren nach Anspruch 10 mit einem Schritt zum Berechnen der Kosten einer vorhergesagten Bewegung unter Verwendung von Gleichung (1), wobei $x_{ik}$ einen Wert von Element k darstellt, der bei der Berechnung von Kosten für eine vorhergesagte Bewegung $V_i$ für einen Bewegungswegkandidaten i verwendet wird, und $\beta_k$ eine Gewichtung für Element k darstellt

$$V_i = \sum_k \beta_k x_{ik} \qquad ..(1).$$

**12.** Programm zum Bewirken, dass ein Computer eines Verkehrsflusssimulators eine Bewegung eines Bewegungsobjekts unter Verwendung des Verfahrens nach Anspruch 10 oder 11 simuliert.

**Revendications**

**1.** Simulateur de flux de trafic pour simuler un déplacement d'un objet mobile qui se déplace à travers un réseau de trafic, le simulateur de flux de trafic comprenant :

une unité de calcul de coût de déplacement prédit (16) configurée pour calculer un coût de déplacement prédit qui est un coût qui peut être encouru dans le déplacement de l'objet mobile pour chaque trajet de déplacement candidat ; et une unité de changement de trajet de déplacement (15) configurée pour effectuer un processus de sélection de l'un d'une pluralité de trajets de déplacement candidats sur la base du coût de déplacement prédit calculé par l'unité de calcul de coût de déplacement prédit (16) et de changement du trajet de déplacement en un trajet comprenant le trajet de déplacement candidat sélectionné ; **caractérisé en ce que** l'unité de calcul de coût de déplacement prédit (16) est configurée pour calculer le coût de déplacement prédit en utilisant au moins l'un d'un temps réel passé et de frais réels passés requis pour le déplacement de chacun des trajets représentés par la pluralité de trajets de déplacement candidats d'un point actuel à un point de destination du déplacement dans lequel l'objet mobile se déplace le long d'un trajet de déplacement prédéterminé ;

et le temps réel passé et les frais réels passés sont des valeurs d'un déplacement passé de l'objet mobile du point actuel au point de destination.

2. Simulateur de flux de trafic selon la revendication 1, **caractérisé en ce qu'**il comprend :

une unité de calcul de coût de déplacement réel passé (14) configurée pour calculer un coût de déplacement réel passé à calculer en utilisant au moins l'un d'un temps et de frais requis pour un déplacement d'un point de départ de l'objet mobile au point actuel,

dans lequel l'unité de changement de trajet de déplacement effectue un processus de changement du trajet de déplacement lorsque le coût depuis le point de départ jusqu'au point de destination basé sur le coût de déplacement réel passé et le coût de déplacement prédit a dépassé une valeur admissible.

3. Simulateur de flux de trafic selon la revendication 1 ou 2, **caractérisé en ce que** l'unité de changement de trajet de déplacement (15) est configurée pour effectuer un processus de changement d'un point intermédiaire avant le point de destination.

4. Simulateur de flux de trafic selon l'une quelconque des revendications 1 à 3, **caractérisé en ce que** l'unité de changement de trajet de déplacement (15) est configurée pour changer le trajet de déplacement en un trajet comprenant un trajet de déplacement candidat lorsqu'un coût de déplacement prédit le plus faible a été calculé parmi la pluralité de trajets de déplacement candidats.

5. Simulateur de flux de trafic selon la revendication 4,

**caractérisé en ce que** l'unité de calcul de coût de déplacement prédit (16) est configurée pour calculer le coût de déplacement prédit en utilisant en outre les informations d'une situation de trafic à un instant actuel.

6. Simulateur de flux de trafic selon l'une quelconque des revendications 1 à 5, **caractérisé en ce qu'**il comprend :

une unité de simulation de sélection de trajet probabiliste (17) configurée pour spécifier un trajet de déplacement jusqu'au point intermédiaire suivant de l'objet mobile en utilisant un procédé de sélection de trajet probabiliste ;

l'unité de simulation de sélection de trajet probabiliste (17) étant configurée pour établir le trajet de déplacement i ayant une valeur la plus faible de $P_i$ représentant une sélectivité du trajet de déplacement i ; dans lequel

$$P_i = \frac{\exp(V_i + \beta_{PS} PS_i)}{\sum_j \exp(V_j + \beta_{PS} PS_j)} \qquad \cdots \quad (3)$$

$v_i$ représente un coût de déplacement prédit du trajet de déplacement i,

$\beta_{PS}$ représente un coefficient de pondération d'un terme de correction,

PSi représente un terme de correction du trajet de déplacement i ;

j est une variable de 1 à n lorsque le trajet de déplacement i est de 1 à n.

7. Simulateur de flux de trafic selon l'une quelconque des revendications 1 à 6, **caractérisé en ce que** l'unité de changement de trajet de déplacement (15) est configurée pour effectuer un processus de changement de point de destination ;

dans lequel l'unité de changement de trajet de déplacement (15) est configurée pour changer le point de destination en un autre point de destination ayant le même attribut que le point de destination lu dans l'unité de mémorisation lorsqu'un coût total prédit depuis le point de départ jusqu'au point de destination obtenu en ajoutant la valeur de coût de déplacement réel passé à une valeur de coût de déplacement prédit a dépassé la valeur admissible.

8. Simulateur de flux de trafic selon l'une quelconque des revendications 1 à 7, **caractérisé en ce que**, lorsque le point actuel est cohérent avec un point intermédiaire, l'unité de changement de trajet de déplacement (15) est configurée pour effectuer un processus de changement de l'objet mobile et du trajet de déplacement sur la base du coût de déplacement prédit.

9. Simulateur de flux de trafic selon l'une quelconque des revendications 1 à 8, **caractérisé en ce que**

l'unité de calcul de coût de déplacement prédit (16) est configurée pour calculer le coût de déplacement prédit en utilisant l'équation (1) où $x_{ik}$ représente une valeur de l'élément k utilisé dans le calcul de coût de déplacement prédit $V_i$ pour le trajet de déplacement candidat i, et $\beta_k$ représente un coefficient de pondération pour l'élément k

$$V_i = \sum_k \beta_k x_{ik} \cdots (1) \,.$$

**10.** Procédé de calcul de trajet de déplacement dans un simulateur de flux de trafic pour simuler le déplacement d'un objet mobile qui se déplace à travers un réseau de trafic, le procédé de calcul de trajet de déplacement comprenant :

le calcul, par une unité de calcul de coût de déplacement prédit (16), d'un coût de déplacement prédit qui est un coût qui peut être encouru dans le déplacement de l'objet mobile pour chaque trajet de déplacement candidat en utilisant au moins l'un d'un temps réel passé et de frais réels passés requis pour le déplacement de chacun des trajets représentés par une pluralité de trajets de déplacement candidats d'un point actuel à un point de destination du trajet de déplacement dans lequel l'objet mobile se déplace le long d'un trajet de déplacement prédéterminé, le temps réel passé et les frais réels passés étant les valeurs d'un déplacement passé de l'objet mobile du point actuel au point de destination ; et
l'exécution, par une unité de changement de trajet de déplacement (15), d'un processus de sélection de l'un de la pluralité de trajets de déplacement candidats sur la base du coût de déplacement prédit calculé par l'unité de calcul de coût de déplacement prédit (16) et de changement du trajet de déplacement en un trajet comprenant le trajet de déplacement candidat sélectionné.

**11.** Procédé de calcul de trajet de déplacement selon la revendication 10, comprenant une étape de calcul du coût de déplacement prédit en utilisant l'équation (1) où $x_{ik}$ représente une valeur de l'élément k utilisé dans le calcul de coût de déplacement prédit $V_i$ pour le trajet de déplacement candidat i, et $\beta_k$ représente un coefficient de pondération pour l'élément k

$$V_i = \sum_k \beta_k x_{ik} \cdots (1) \,.$$

**12.** Programme pour amener un ordinateur d'un simulateur de flux de trafic à simuler un déplacement d'un objet mobile en utilisant le procédé de la revendication 10 ou 11.

FIG. 1

EP 2 793 204 B1

FIG. 2

START

INPUT INFORMATION OF DEPARTURE POINT, DESTINATION POINT, DEPARTURE TIME, AND MOVING MEANS — S101

COMPUTE INITIAL MOVEMENT ROUTE — S102

COMPUTE PAST ACTUAL MOVEMENT COST $R_i$ UP TO CURRENT POINT — S103

HAS TOTAL COST FROM DEPARTURE POINT TO DESTINATION POINT EXCEEDED ALLOWABLE VALUE? — S104

NO

YES

COMPUTE MOVEMENT ROUTE CANDIDATE — S105

COMPUTE PREDICTED MOVEMENT COST $V_i$ OF EACH MOVEMENT ROUTE CANDIDATE — S106

SPECIFY MOVEMENT ROUTE CANDIDATE i HAVING LOWEST VALUE OF PREDICTED MOVEMENT COST $V_i$ AS MOVEMENT ROUTE AFTER CHANGE — S107

IS CURRENT POINT INTERSECTION? — S108

NO

YES

COMPUTE DETAILED MOVEMENT ROUTE TO NEXT VIA-POINT — S109

ESTABLISH MOVEMENT ROUTE — S110

HAS DESTINATION POINT BEEN REACHED? — S111

NO

YES

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011273434 A
- US 20020035430 A1
- US 20040172192 A1
- JP 2010067180 A